Europäisches Patentamt

European Patent Office

Office européen des brevets

(11) Veröffentlichungsnummer: **0 316 606 B1**

# EUROPÄISCHE PATENTSCHRIFT

(45) Veröffentlichungstag der Patentschrift: **11.12.91**

(51) Int. Cl.⁵: **F16L 3/22**

(21) Anmeldenummer: **88117462.7**

(22) Anmeldetag: **20.10.88**

(54) Leitungshalter zur Befestigung von Versorgungsleitungen an Kraftfahrzeugen.

(30) Priorität: **14.11.87 DE 3738720**

(43) Veröffentlichungstag der Anmeldung:
**24.05.89 Patentblatt 89/21**

(45) Bekanntmachung des Hinweises auf die
Patenterteilung:
**11.12.91 Patentblatt 91/50**

(84) Benannte Vertragsstaaten:
**ES FR GB IT SE**

(56) Entgegenhaltungen:
**WO-A-82/02239          DE-A- 3 705 626**
**DE-U- 8 217 595        DE-U- 8 314 924**
**GB-A- 2 054 722        US-A- 3 856 246**
**US-A- 4 306 697**

(73) Patentinhaber: **A. Raymond & Cie**
**113, Cours Berriat**
**F-38028 Grenoble(FR)**

(72) Erfinder: **Moretti, Erminio**
**8, rue Clot-Bey**
**F-38000 Grenoble(FR)**

(74) Vertreter: **Kirchgaesser, Johannes, Dipl.-Ing.**
**p/a Fa. A. RAYMOND KG, Teichstrasse 57**
**W-7850 Lörrach(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf einen Leitungshalter zur Befestigung von Versorgungsleitungen an Kraftfahrzeugen unter Verwendung von an der Unterseite der Karosserie befestigter Steckbolzen, insbesondere Gewindebolzen, mit einem integrierten Befestigungsteil zum Aufdrücken des Leitungshalters auf die Steckbolzen, wobei die für den Verlegungsbereich unter der Karosserie auf Länge abgeschnittenen und ausgerichteten Versorgungsleitungen an lagebestimmten Positionen mit dem Leitungshalter verbindbar sind (DE-A-37 05 626, Offenlegungstag 01.09.88.).

Voraussetzung für eine problemlose Montage ist die positionsgenaue Ausrichtung der Leitungshalter entsprechend den Abständen zwischen den Gewindebolzen. Das Ausrichten der Leitungshalter kann auf der Montageplatte neben der Bandstraße erfolgen, indem die Leitungshalter in die auf der Montageplatte vorgesehenen Vertiefungen geschoben werden, welche den Positionen der Gewindebolzen genau angepasst sind.

Will man beim Autohersteller diesen Montagevorgang des Ausrichtens der Leitungshalter einsparen, so müssen die Leitungshalter auf den Versorgungsleitungen bereits beim Zulieferanten an lagebestimmten Stellen in Längsrichtung unverschiebbar festgelegt werden. Ferner muß sichergestellt werden, daß die vormontierten Leitungshalter während des Transports und bis zur Auflage auf die Montageplatte an der Bandstraße die den Abständen zwischen den Gewindebolzen entsprechenden Positionen beibehalten. Hierzu sind im Stand der Technik verschiedene Realisierungsmöglichkeiten angegeben, welche entweder aus zusätzlichen Positionierungsmitteln - wie Klemmfedern oder Gummieinsätzen - oder aber in der Verwendung von Versorgungsleitungen mit besonders angeformten Wülsten bestehen, die eine Axialverschiebung verhindern.

Aufgabe der vorliegenden Erfindung ist es, die Fixierung der positionierten Leitungshalter mit einfacheren Mitteln zu erreichen und gleichzeitig für den Transport und die anschließende Montage an der Bandstraße bessere Anlieferungsbedingungen zu schaffen.

Diese Aufgabe wird im wesentlichen dadurch gelöst, daß eine Mehrzahl von Leitungshaltern mit ihren Befestigungsteilen übereinander stapelbar ausgebildet und mit elastisch ein- und ausrastbaren Verbindungselementen versehen sind, durch welche die Leitungshalter in ihren lagebestimmten Positionen gegeneinander fixierbar sind.

Auf diese Weise wird erreicht, daß die Montageeinheiten allein durch die besondere Ausgestaltung der Leitungshalter für den Transport als zusammenhängende Pakete gerichtet und angeliefert werden können. Hierbei ergibt sich als weiterer Vorteil, daß die Leitungshalter, die jeder für sich alleine auf den Versorgungsleitungen in Längsrichtung verrutschen würden, in der zueinander fixierten Gesamtheit wegen des sich vervielfachenden Reibungswiderstandes auf den Leitungen unverschiebbar festgelegt sind.

Das so angelieferte Paket mit Montageeinheiten wird beim Verbraucher, d. h. beim Autohersteller an der Bandstraße in eine Art Magazin eingelegt, wo dann jeweils die unterste Montageeinheit durch gewaltsames Ausrasten der Verbindungsstellen vom Paket getrennt und auf die Montageplatte gelegt wird. Diese wird nun unter den Fahrzeugboden bewegt und derart hochgeführt, daß die Leitungshalter mit ihren Befestigungsstellen auf die Steckbolzen aufgedrückt werden.

Die erfindungsgemäß vorgesehenen Leitungshalter sind zweckmäßigerweise so ausgebildet, daß das integrierte Befestigungsteil beiderseits des Aufnahmelochs für den Steckbolzen diametral gegenüberliegend zwei elastisch aufweitbare Rasthaken aufweist, welche in entsprechenden Aussparungen des anliegenden Befestigungsteils des nachfolgenden Leitungshalter einrastbar sind, wobei die Aussparungen vorzugsweise auf der Einführseite des Bolzenaufnahmelochs und die Rasthaken auf der entgegengesetzten Seite angeordnet sind.

Weitere Merkmale der Erfindung ergeben sich aus den Unteransprüchen und der nachfolgenden Beschreibung eines Ausführungsbeispiels in Verbindung mit den Zeichnungen.

Es zeigt

Fig. 1    einen erfindungsgemäßen Leitungshalter in Seitenansicht mit Teilschnitt an der Bolzeneinführseite,

Fig. 2    einen Querschnitt durch das Bolzenaufnahmeloch gemäß Linie II-II in Fig. 1,

Fig. 3    zwei übereinander angeordnete Leitungshalter beim Zusammenfügen,

Fig. 4    zwei zusammengefügte Leitungshalter,

Fig. 5    mehrere, als Paket zusammengefügte Montageeinheiten in Seitenansicht,

Fig. 6    das gleiche Paket im Querschnitt,

Fig. 7    das gleiche Paket beim Abziehen der untersten Montageeinheit zwecks Übergabe an die Montageplatte in Seitenansicht,

Fig. 8    der gleiche Arbeitsvorgang im Querschnitt,

Fig. 9    die Montageeinheit beim Andrücken an den Fahrzeugboden,

Fig. 10    die am Fahrzeugboden befestigte Montageeinheit in Seitenansicht und

Fig. 11    einen Querschnitt durch die befestigte Montageeinheit in vergrößerter Darstellung.

Zeichnungsbeschreibung :

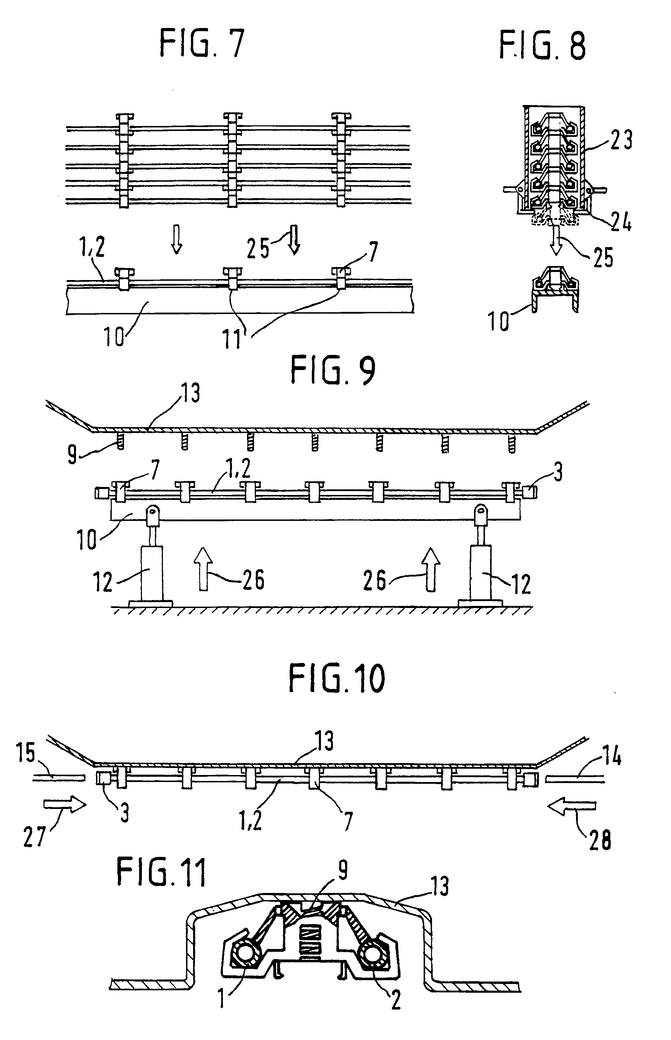

Die in den Figuren 9 und 10 dargestellte Montageeinheit besteht im wesentlichen aus zwei Versorgungsleitungen 1 und 2, die vorzugsweise aus Kunststoff hergestellt sind und gleiche oder unterschiedliche Durchmesser aufweisen können. Die Leitungen 1 und 2 können an ihren Enden mit sogenannten Einsteckkupplungen 3 verbunden sein, welche dazu bestimmt sind, weiterführende Verbindungsleitungen 14 und 15 aufzunehmen. Es versteht sich, daß die Einsteckkupplungen 3 auch mit den Enden der Verbindungsleitungen 14 und 15 verbunden sein können, so daß die Versorgungsleitungen 1 und 2 auf die gleiche Weise mit den Verbindungsleitungen zusammengeführt werden können.

Die Versorgungsleitungen 1, 2 sind mit einer Vielzahl von Leitungshaltern 7 untereinander verbunden, welche mit einem integrierten Befestigerteil 8 zum Aufdrücken der Leitungshalter 7 auf sogenannte Steckbolzen 9 versehen sind. Diese können sowohl als T-Bolzen wie auch als Gewindebolzen ausgebildet sein, wobei in der Zeichnung die bevorzugten Gewindebolzen 9 dargestellt sind (Fig. 9, 10 und 11).

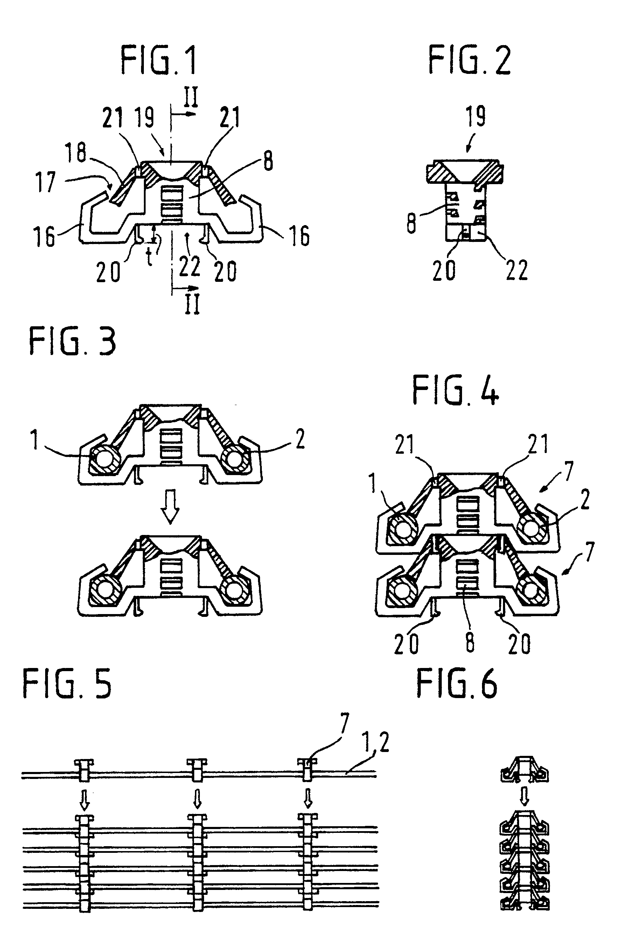

Die Leitungshalter 7 sind, wie noch im einzelnen ausgeführt wird, mit ihren Befestigungsteilen 8 übereinander stapelbar ausgebildet, so daß jeweils mehrere Montageeinheiten zu einem Paket zusammengefügt werden können. Ferner sind die Leitungshalter 7 mit elastisch ein- und ausrastbaren Verbindungselementen 20 und 21 versehen, die es gestatten, die Leitungshalter 7 für den Transport gegeneinander zu fixieren (Fig. 5 und 6).

Der zur Bildung der stapelbaren Montageeinheiten vorgesehene Leitungshalter 7 besteht bei dem in Fig. 1 u. 2 gezeigten Ausführungsbeispiel aus dem vorerwähnten Befestigungsteil 8 und beiderseits davon angeformten Halteschalen 16 mit Öffnungen 17, welche durch am Befestigungsteil 8 angeformte Verschlußfinger 18 überdeckt werden. Diese Verschlußfinger 18 sind in das Zentrum der Halteschalen 16 gerichtet, weichen beim Eindrücken der Versorgungsleitungen 1 u. 2 zum Befestigungsteil hin elastisch aus, federn sodann wieder zurück und stützen sich radial auf der Oberfläche der eingelegten Leitungen 1 und 2 ab (Fig. 3 u. 4).

Das Befestigungsteil 8 ist mit einem sich trichterförmig erweiternden Aufnahmeloch 19 für den Gewindebolzen 9 versehen. Beiderseits des Aufnahmelochs 19 befinden sich an der Unterseite des Befestigungsteils 8 diametral gegenüberliegend zwei elastisch aufweitbare Rasthaken 20 und am oberen Rand des Befestigungsteils 8 an der entsprechenden Stelle zwei Rastlöcher 21, welche die Verschlußfinger 18 an der oberen Anformstelle durchdringen und zur Aufnahme der Rasthaken 20 ausgebildet sind (Fig. 1 und 2). Es versteht sich, daß zum vorübergehenden Fixieren der Leitungshalter 7 auch andere geeignete Rast- oder Verbindungselemente - wie Druckknöpfe oder dgl. - verwendet werden können, welche durch äußere Krafteinwirkung wieder lösbar sind. Ebenso lassen sich beim Aufeinanderstapeln glatte Stangen durch die Aufnahmelöcher schieben, um die Leitungshalter übereinander zu fixieren.

Um die Leitungshalter 7 leichter stapeln zu können, ist das Befestigungsteil 8 zu den seitlich angeformten Halteschalen 16 in der Höhe so weit versetzt, daß sich zwischen den Halteschalen 16 eine Nische 22 bildet, welche in der Form dem auf der anderen Seite überstehenden Befestigungsteil 8 angepaßt ist. Hierbei ist es für die anschließende Montage der Leitungshalter 7 zweckmäßig, wenn die aus dem Befestigungsteil 8 nach unten abstehenden Rasthaken 20 sich lediglich über die Tiefe "t" der Nische erstrecken, also nicht überstehen.

Die Montagefolge für die Verarbeitung der angelieferten Pakete mit Montageeinheiten ist in den Fig. 7 - 11 schematisch dargestellt.

Zunächst wird das gesamte Paket mit vormontierten Versorgungsleitungen 1 u. 2 in ein dafür eingerichtetes Magazin 23 eingelegt, das am unteren Ende mit ausschwenkbaren Sperrklinken 24 versehen ist (Fig. 8). Diese werden jeweils unterhalb des vorletzten Leitungshalters 7 zwischen die Halteschalen 16 eingeschoben, so daß die letzte, gestrichelt dargestellte Montageeinheit aus dem Magazin 23 hervorragt. Diese Montageeinheit wird sodann durch Abreißen der Verbindungsstellen 19, 20 vom Paket getrennt und in Richtung der Pfeile 25 auf eine darunter befindliche Montageplatte 10 abgelegt, auf welcher zur Fixierung der lagebestimmten Leitungshalter 7 entsprechende Aussparungen 11 vorgesehen sind.

Sodann wird die bestückte Montageplatte 10 auf ihren Platz am Montageband gestellt und mittels einer Hubvorrichtung 12 in Richtung der Pfeile 26 gegen die Fahrzeugkarosserie 13 hochgefahren (Fig. 9), bis die Leitungshalter 7 mit ihren Befestigungsteilen 8 auf den Gewindebolzen 9 verankert sind. Zum Schluß werden noch die Verbindungsleitungen 14 und 15 in Richtung der Pfeile 27 und 28 in die Kupplungsstücke 3 eingesteckt, welche bereits auf den Enden der Versorgungsleitungen 1 und 2 aufgesteckt sind (Fig. 10).

**Patentansprüche**

1. Leitungshalter zur Befestigung von Versorgungsleitungen an Kraftfahrzeugen unter Verwendung von an der Unterseite der Karosserie befestigter Steckbolzen, insbesondere Gewindebolzen, mit einem integrierten Befestigungsteil (8) zum Aufdrücken des Leitungshalters auf die Steckbolzen, wobei die für den Verlegungsbereich unter der Karosserie auf Länge abgeschnittenen und ausgerichteten Versorgungsleitungen an lagebestimmten Positionen mit dem Leitungshalter verbindbar sind, und wobei eine Mehrzahl von Leitungshaltern (7) mit ihren Befestigungsteilen (8) übereinander stapelbar ausgebildet und mit elastisch ein- und ausrastbaren Verbindungselementen (20, 21) versehen sind, durch welche die Leitungshalter (7) in ihren lagebestimmten Positionen gegeneinander fixierbar sind.

2. Leitungshalter nach Anspruch 1,
**dadurch gekennzeichnet,** daß
das integrierte Befestigungsteil (8) beiderseits des Aufnahmelochs (19) für den Steckbolzen (9) diametral gegenüberliegend zwei elastisch aufweitbare Rasthaken (20) aufweist, welche in entsprechenden Aussparungen (21) des anliegenden Befestigungsteils (8) des nachfolgenden Leitungshalters (7) einrastbar sind.

3. Leitungshalter nach Anspruch 3,
**dadurch gekennzeichnet,** daß
die Aussparungen (21) auf der Einführseite des Bolzenaufnahmelochs (19) und die Rasthaken (20) auf der entgegengesetzten Seite angeordnet sind.

4. Leitungshalter nach Anspruch 2,
**dadurch gekennzeichnet,** daß
das Befestigungsteil (8) zu den seitlich angeformten Halteschalen (16) in der Höhe versetzt ist, so daß sich zwischen den Halteschalen (16) eine Nische (22) bildet, welche in der Form dem auf der anderen Seite überstehenden Befestigungsteil (8) angepaßt ist.

5. Leitungshalter nach Anspruch 4,
**dadurch gekennzeichnet,** daß
die aus dem Befestigungsteil (8) abstehenden Rasthaken (20) sich über die Tiefe "t" der Nische (22) erstrecken.

6. Arbeitsverfahren zur Befestigung einer Montageeinheit aus Versorgungsleitungen und Leitungshaltern nach Anspruch 1,
**dadurch gekennzeichnet,** daß
eine Anzahl von Montageeinheiten für den Transport zunächst übereinander gestapelt und über die Verbindungselementen an den Leitungshaltern gegeneinander fixiert wird, daß dieses Paket dann beim Verbraucher in ein Magazin (23) eingelegt und dort die jeweils unterste Montageeinheit von dem Paket getrennt und auf eine Montageplatte (10) eingelegt wird, welche zum Andrücken der Leitungshalter auf die Befestigungsstellen unter den Fahrzeugboden bewegt und dann derart hochgeführt wird, daß die Leitungshalter mit ihren Befestigungsteilen auf die Steckbolzen aufgedrückt werden.

## Claims

1. A line holder for fixing supply lines to motor vehicles using fitment pins, in particular screwthreaded pins, which are fixed to the underside of the bodywork, comprising an integrated fixing portion (8) for the line holder to be pressed on to the fitment pins, wherein the supply lines which are cut to length and oriented for the region for routing thereof beneath the bodywork can be connected to the line holder at located positions, and wherein a plurality of line holders (7) are adapted to be stackable one above the other with their fixing portions (8) and are provided with resiliently engageable and disengageable connecting elements (20, 21) by which the line holders (7) can be fixed in their located positions relative to each other.

2. A line holder according to claim 1 characterised in that the integrated fixing portion (8) is provided on both sides of the receiving hole (19) for the fitment pin (9) in diametrally opposite relationship with two resiliently expandable retaining hooks (20) which are engageable in corresponding openings (21) in the adjoining fixing portion (8) of the following line holder (7).

3. A line holder according to claim 3 characterised in that the openings (21) are arranged on the insertion side of the pin receiving hole (19) and the retaining hooks (20) are arranged on the opposite side.

4. A line holder according to clam 2 characterised in that the fixing portion (8) is displaced in respect of height relative to the holding casing portions (16) formed laterally thereon, so that formed between the holding casing portions (16) is a recess (22) which is adapted in shape to the fixing portion (8) which projects on the other side.

5. A line holder according to claim 4 characterised in that the retaining hooks (20) which project from the fixing portion (8) extend over the depth 't' of the recess (22).

6. A working method for fixing an assembly unit comprising supply lines and line holders according to claim 1 characterised in that a number of assembly units are firstly stacked one above the other for transportation and fixed relative to each other by way of the connecting elements on the line holders, that that set is then inserted by the user into a magazine (23) and there the respective lowermost assembly unit is separated from the set and fitted on to an assembly plate (10) which for the purposes of the line holders being pressed on to the fixing locations is moved into position beneath the vehicle bottom and then raised in such a way that the line holders are pressed with their fixing portions on to the fitment pins.

**Revendications**

1. Support de canalisations pour la fixation de conduites d'alimentation équipant les véhicules automobiles, utilisant à cet effet des tiges d'emmanchement fixées à la partie inférieure de la carrosserie, ces tiges pouvant notamment se présenter sous la forme de goujons filetés, comportant un élément d'ancrage (8) intégré permettant d'appliquer par pression le support de canalisation sur la tige d'emmanchement, les conduites d'alimentation, tronçonnées à la longueur voulue et ajustées en fonction de la zone de pose sous la carrosserie, pouvant être en l'occurrence fixées sur le support dans des positions données et la plupart des supports (7) munis de leurs éléments d'ancrage (8) étant en l'occurrence conçus pour pouvoir être montés en empilage et étant munis d'organes de liaison pouvant s'accrocher l'un dans l'autre et se décrocher de même par effet élastique (20, 21) et par l'intermédiaire desquels les supports de canalisations (7) peuvent être réciproquement fixés dans la position donnée.

2. Support de canalisations suivant la revendication 1, **se caractérisant par le fait** que l'élément d'ancrage intégré (8) comporte, sur les deux côtés du trou de réception (19) de la tige d'emmanchement (9) deux crochets à cran d'arrêt (20) diamétralement opposés pouvant s'écarter par effet élastique, qui viennent s'encliqueter dans des évidements correspondants (21) de l'élément d'ancrage voisin (8) du support dec canalisation (7) suivant.

3. Support de canalisation suivant le revendication 3, **se caractérisant par le fait** que les évidements (21) sont disposés sur le côté introduction du trou de réception (19) et les crochets à cran d'arrêt (20) sur le côté opposé.

4. Support de canalisation suivant le revendication 2, **se caractérisant par le fait** que l'élément d'ancrage (8) se trouve décalé dans le plan vertical par rapport aux organes de retenue (16) à disposition latérale, dans des conditions telles qu'il se forme une niche (22) entre les organes de retenue (16) font la forme est adaptée à la géométrie de l'élément d'ancrage (8) faisant saillie sur l'autre côté.

5. Support de canalisation suivant le revendication 4, **se caractérisant par le fait** que les crochets à cran d'arrêt (20) décollés de l'élément d'ancrage (8) s'étendent sur la profondeur "t" de la niche (22).

6. Mode opératoire pour la fixation d'une unité de montage constituée de conduites d'alimentation et de supports de canalisations suivant la revendication 1, **se caractérisant par le fait** qu'un certain nombre d'unités de montage sont tout d'abord empilées les unes sur les autres pour le transport et fixées l'une contre l'autre sur les supports de canalisation par l'intermédiaire des organes de liaison, que cet ensemble est ensuite disposé chez l'utilisateur dans un magasin (23) et que c'est à chaque fois l'unité de montage qui se trouve à la partie inférieure qui est prélevée dans cet ensemble et placée sur une table de montage (10) que l'on glisse sous la carrosserie du véhicule pour application par pression des supports de canalisations aux endroits de fixation prévus et qui monte ensuite de manière à réaliser l'emmanchement des supports de canalisations avec leurs éléments d'ancrage sur les tiges d'emmanchement.

EP 0 316 606 B1

FIG.1

FIG.2

FIG.3

FIG.4

FIG.5

FIG.6

6

## FIG. 7

## FIG. 8

1,2
25
7
10
11

23
24
25
10

## FIG. 9

13
9
7
1,2
3
10
12
26
26
12

## FIG.10

15
13
14
3
1,2
7
27
28

## FIG.11

9
13
1
2